# EUROPEAN PATENT APPLICATION

(11) **EP 4 596 931 A1**
(43) Date of publication of application: **06.08.2025**
(21) Application number: 24167472.0
(22) Date of filing: 28.03.2024
(51) Int. Cl.: F16K 11/00, F16K 11/22, F16K 27/00, F16K 31/60, B29C 45/26, B29C 45/44

(54) **SHOWER FAUCET AND VALVE BODY THEREOF**

(30) Priority: 01.02.2024 CN 202410146597
(71) Applicant: Fujian Xihe Sanitary Ware Technology Co., Ltd., QuanZhou, Fujian (CN)
(72) Inventor: LIN, Xiaofa, QUANZHOU (CN); LIN, Xiaoshan, QUANZHOU (CN); JI, Hejun, QUANZHOU (CN); YU, Kaishi, QUANZHOU (CN); DENG, Xiaoqing, QUANZHOU (CN); LIU, Qiqiao, QUANZHOU (CN)
(74) Representative: Arnold & Siedsma

(57) **Abstract**

The present application provides a shower faucet and a valve body (100) thereof. The valve body is an integrated injection molded part, and a water channel is provided in the valve body, which includes a water inlet waterway, a main control water cavity (11), a water outlet waterway and at least one water outlet cavity (13); the main control water cavity is disposed for installation of a main control valve group; one end of the water inlet waterway is closed, and the other end of the water inlet waterway is communicated with a end of the main control water cavity; the water outlet waterway and the water inlet waterway are disposed side by side at intervals, and one end of the water outlet waterway is closed, and the other end of the water outlet waterway is communicated with a end of the main control water cavity; the at least one water outlet cavity is communicated with the water outlet waterway; a core-pulling port is formed at an end of the main control water cavity away from the water inlet waterway and the water outlet waterway, and projections of the water inlet waterway, the water outlet waterway and the main control water cavity in a plane where the core-pulling port is located are all in the core-pulling port, so that the water inlet waterway, the water outlet waterway and the main control water cavity can be formed by core-pulling with the same mold core. The water channel of the valve body has simple structure, low cost and short injection molding cycle.

## Description

### Technical Field

The present application relates to the technical field of bathroom products, and in particular to a shower faucet and a valve body thereof.

### Background

A valve body of the existing shower faucet has complex processing technology, many processing steps, more die investment and longer production cycle.

### Summary

An embodiment of the present application provides a valve body. The valve body is an integrated injection molded part, and a water channel is provided in the valve body, which includes a water inlet waterway, a main control water cavity, a water outlet waterway and at least one water outlet cavity. The main control water cavity is disposed for installation of a main control valve group.

One end of the water inlet waterway is closed, and the other end of the water inlet waterway is communicated with an end of the main control water cavity.

The water outlet waterway and the water inlet waterway are disposed side by side at intervals, and one end of the water outlet waterway is closed, and the other end of the water outlet waterway is communicated with an end of the main control water cavity.

The at least one water outlet cavity is communicated with the water outlet waterway.

A core-pulling port is formed at an end of the main control water cavity away from the water inlet waterway and the water outlet waterway. Projections of the water inlet waterway, the water outlet waterway and the main control water cavity in a plane where the core-pulling port is located are all in the core-pulling port, so that the water inlet waterway, the water outlet waterway and the main control water cavity can be formed by core-pulling with the same mold core.

In an exemplary embodiment, the water outlet waterway includes a first transition waterway and a water outlet waterway body. The first transition waterway is located between the water outlet waterway body and the main control water cavity, and is communicated with the water outlet waterway body and the main control water cavity. The water outlet waterway body is communicated with the at least one water outlet cavity.

A projection of the water outlet waterway body in the plane where the core-pulling port is located is in a projection of the first transition waterway in the plane where the core-pulling port is located, and the first transition waterway is disposed to be sealingly connected with a water outlet pipe of the main control valve group.

In an exemplary embodiment, the water inlet waterway includes a second transition waterway and a water inlet waterway body. The second transition waterway is located between the water inlet waterway body and the main control water cavity, and is communicated with the water inlet waterway body and the main control water cavity.

The second transition waterway is disposed to communicate with a water inlet hole of the main control valve group, and a projection of the water inlet waterway body in the plane where the core-pulling port is located is in a projection of the second transition waterway in the plane where the core-pulling port is located.

In an exemplary embodiment, the first transition waterway and the second transition waterway are separated by a spacer plate. The spacer plate is disposed to abut against and fit with the main control valve group.

A cross-sectional area of the first transition waterway is larger than a cross-sectional area of the second transition waterway.

In an exemplary embodiment, the water inlet waterway is a hot water waterway, and the valve body is provided with a first water inlet communicated with the water inlet waterway and a second water inlet communicated with the main control water cavity. One of the first water inlet and the second water inlet is a cold water inlet, and the other of the first water inlet and the second water inlet is a hot water inlet, and the main control valve group is provided as a temperature control valve group.

There are a plurality of water outlet cavities, the plurality of water outlet cavities are disposed at intervals along an extension direction of the water outlet waterway, and any one of the water outlet cavities is disposed for installation of an on-off valve group or a plug.

In an exemplary embodiment, the main control water cavity is provided with a first connecting structure, and the temperature control valve group is a thermostatic valve group or a mechanical temperature regulating valve group provided with a second connecting structure. The first connecting structure is disposed to be connected with the second connecting structure.

The water outlet cavity is provided with a third connecting structure and the third connecting structure is disposed to be connected with a fourth connecting structure of the on-off valve group or the plug.

An embodiment of the present application also provides a shower faucet, which includes: the valve body according to any one of the preceding embodiments; and a main control valve group, which is installed to the main control water cavity.

In an exemplary embodiment, the main control valve group includes a valve seat and a valve core. The valve core is provided with a water inlet hole and a water outlet hole, the valve seat is provided with a water flow passage, a water inlet flow passage and a water outlet pipe, and the water inlet waterway, the water flow passage and the water inlet hole are communicated sequentially. The water outlet hole is butted and communicated with the water inlet flow passage, and the water outlet pipe is butted and communicated with the water outlet waterway. The water outlet pipe is communicated with the water inlet flow passage and is disposed eccentrically with respect to the water inlet flow passage.

In an exemplary embodiment, the shower faucet further includes: a water inlet joint assembly being connected with the valve body and communicated with the water inlet waterway or a main control valve cavity; and a housing being detachably connected with the valve body and provided with an installation cavity and installation notches corresponding to the main control valve group, the water inlet joint assembly and the water outlet cavity, at least a part of the valve body and at least a part of the main control valve group being located in the installation cavity.

In an exemplary embodiment, the housing includes a bottom shell and a cover shell assembled in a split manner. The cover shell includes at least one of a first cover shell, a second cover shell and a third cover shell, and the first cover shell, the second cover shell and the third cover shell can all be closed with the bottom shell to form the installation cavity.

The water inlet joint assembly includes a nut and a decorative cover located outside the installation cavity, and the nut and the decorative cover are arranged sequentially along a direction away from the valve body.

The first cover shell is provided with a first shielding portion for shielding the nut and the decorative cover.

The second cover shell is provided with a second shielding portion for shielding the nut, and the decorative cover is exposed on the second cover shell.

Both the nut and the decorative cover are exposed on the third cover shell.

In an exemplary embodiment, the water outlet cavity is provided with an on-off valve group connected to a handle. The on-off valve group includes a valve core rod provided with a first connecting hole, and an axis of the first connecting hole is perpendicular to an extension direction of the valve core rod. The handle is provided with a second connecting hole, and the first connecting hole and the second connecting hole are disposed for installation of a self-tapping screw to connect the handle and the valve core rod by the self-tapping screw.

One end of the water inlet waterway and one end of the water outlet waterway of the valve body in an embodiment of the present application are closed, and the water channel can be formed by using a mold core on one side of the valve body for core-pulling once, without opening a core-pulling hole on the other side of the valve body for core-pulling. The water channel is formed by core-pulling on one side, which eliminates a process core-pulling hole on the other side, thus reducing the number of assembled parts and assembly time, simplifying a water channel structure of the valve body, reducing the material cost and shortening the injection molding cycle. In addition, the outer diameter of the mold core of an embodiment of the present application is larger than the outer diameter of the conventional mold core. Therefore, when manufacturing the mold core, the mold core is not easy to bend or break.

Other features and advantages of the present application will be set forth in the description which follows, and in part will become obvious from the description, or may be learned by practice of the present application. Other advantages of the present application can be realized and obtained by embodiments described in the description and the drawings.

### Brief Description of Drawings

The drawings are used to provide an understanding of technical schemes of the present application, and constitute a part of the specification. They are used to explain the technical schemes of the present application together with the embodiments of the present application, and do not constitute a limitation on the technical schemes of the present application.
FIG. 1 is a schematic view of a three-dimensional structure of a valve body according to an embodiment of the present application;
FIG. 2 is a schematic cutaway view of the three-dimensional structure of the valve body shown in FIG. 1;
FIG. 3 is a schematic view of a three-dimensional structure of a mold core according to an embodiment of the present application;
FIG. 4 is a schematic side view of a structure of the valve body shown in FIG. 1;
FIG. 5 is a schematic view of a B-B cross-sectional structure of the valve body shown in FIG. 4;
FIG. 6 is a schematic bottom view of a structure of the valve body shown in FIG. 5;
FIG. 7 is a schematic view of a three-dimensional structure of a shower faucet according to an embodiment of the present application;
FIG. 8 is a schematic exploded view of a structure of the shower faucet shown in FIG. 7;
FIG. 9 shows a schematic exploded view of a structure of a valve body and a valve core and a valve seat of a main control valve group and schematically shows a water flow path;
FIG. 10 shows a schematic view of a structure of a valve core and a valve seat of the main control valve group assembled to the valve body and schematically shows a water flow path;
FIG. 11 shows a schematic view of a three-dimensional structure of a valve seat of a main control valve group;
FIG. 12 shows a schematic side view of a structure of the valve seat shown in FIG. 11;
FIG. 13 is a schematic view of a C1-C1 cross-sectional structure of the valve seat shown in FIG. 12;
FIG. 14 shows a schematic exploded view of a structure of a valve body and a plurality of valve groups;
FIG. 15 shows a schematic view of installation of a valve body and a housing;
FIGS. 16 to 18 show schematic structural views of three different cover shells;
FIGS. 19 to 21 show schematic structural views after assembly of three different cover shells;
FIG. 22 shows a schematic exploded view of a structure of a handle and the rest of a shower faucet;
FIG. 23 shows a schematic view of a three-dimensional structure of a valve core of an on-off valve group;
FIG. 24 shows a schematic view of a three-dimensional structure of a handle; and
FIG. 25 shows a schematic view of a cross-sectional structure of a self-tapping screw connecting a handle and a valve core rod.

Reference signs:
100- valve body, 200- shower faucet;
10- water inlet waterway, 101- second transition waterway, 102- water inlet waterway body; 11- main control water cavity, 111- core-pulling port, 112- first connecting structure; 12- water outlet waterway, 121- first transition waterway, 122- water outlet waterway body; 13- water outlet cavity, 131- third connecting structure, 132- top spray water outlet, 133- hand-held shower water outlet, 134- drainage water outlet; 14- main control valve group, 141- thermostatic valve group, 142-mechanical temperature regulating valve group, 143- single-handle mechanical valve group, 144-second connecting structure, 145- valve seat, 1451- water flow passage, 14511- hot water flow passage, 14512- cold water flow passage, 1452- water inlet flow passage, 1453- water outlet pipe, 146- valve core, 1461- water inlet hole, 14611- hot water inlet hole, 14612- cold water inlet hole, 1462- water outlet hole; 15- die core, 151- spacer; 16- first water inlet; 17- second water inlet; 18-on-off valve group, 181- fourth connecting structure, 182- valve core rod, 1821- first connecting hole; 19- plug; 20- water inlet joint assembly, 201- nut, 202- decorative cover; 21- housing, 211-installation notch, 2121- first cover shell, 21211- first shielding portion, 2122- second cover shell, 21221- second shielding portion 2123- third cover shell; 22- handle, 221- second connecting hole; 23- self-tapping screw; 24- spacer plate.

### Detailed Description

The present application describes multiple embodiments, but this description is exemplary and not limiting, and it will be obvious to those of ordinary skills in the art that more embodiments and implementations may be included within the scope of the embodiments described by the present application. Although many possible combinations of features are shown in the drawings and discussed in the detailed description, many other combinations of the disclosed features are also possible. Unless specifically limited, any feature or element of any embodiment may be used in combination with, or may substitute for, any other feature or element of any other embodiment.

The present application includes and contemplates combinations with features and elements known to those of ordinary skills in the art. Embodiments, features and elements already disclosed the present application may also be combined with any conventional features or elements to form a unique inventive solution. Any feature or element of any embodiment may also be combined with features or elements from other inventive solutions to form another unique inventive solution. Accordingly, it should be understood that any of the features shown and/or discussed in the present application may be implemented alone or in any suitable combination. Thus, the embodiments are not subjected to limitations other than those made in accordance with the appended claims and their equivalent substitutions. In addition, various modifications and changes may be made within the protection scope of the appended claims.

Furthermore, when describing representative embodiments, the specification may have presented a method and/or process as a particular sequence of steps. However, to the extent that the method or process does not depend on the specific order of steps described herein, the method or process should not be limited to the specific order of steps described. As will be understood by those of ordinary skill in the art, other order of steps is also possible. Accordingly, a particular order of steps set forth in the specification should not be construed as limitations on the claims. Furthermore, the claims for the method and/or process should not be limited to the steps which are performed in the written order. Those skilled in the art can readily understand that these orders can be changed and the changed orders still remain within the spirit and scope of the embodiments of the present application.

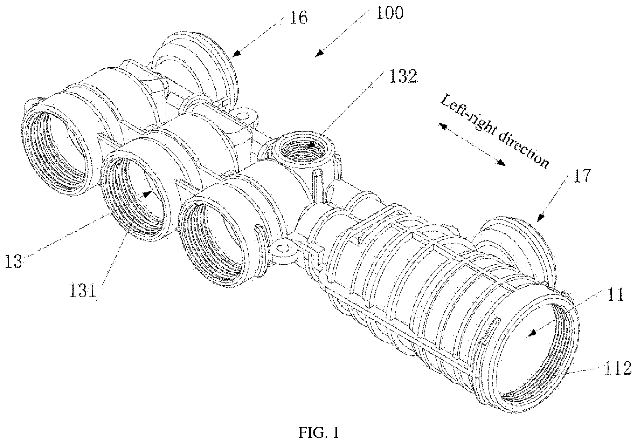

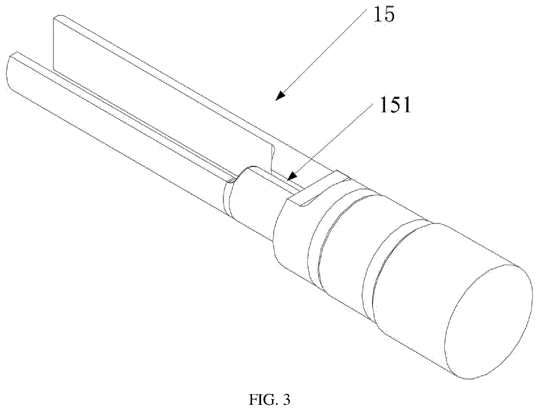

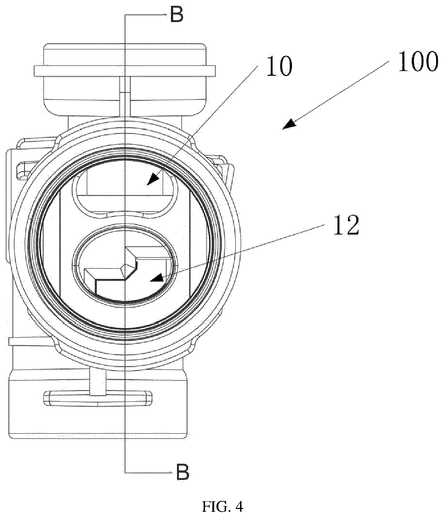

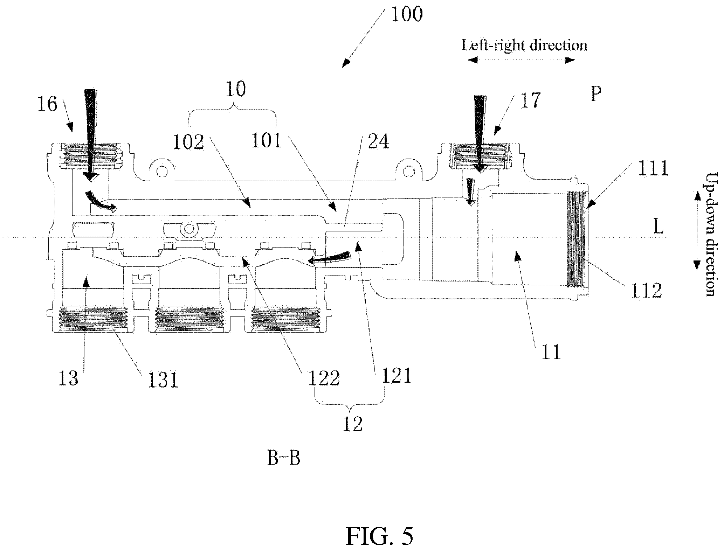

An embodiment of the present application provides a valve body 100. As shown in FIGS. 1 to 6, the valve body 100 is an integrated injection molded part, and a water channel is provided in the valve body 100. The water channel includes a water inlet waterway 10, a main control water cavity 11, a water outlet waterway 12 and at least one water outlet cavity 13. The main control water cavity 11 is disposed for installation of a main control valve group 14. One end (for example, the left end in FIG. 5) of the water inlet waterway 10 is closed and the other end (for example, the right end in FIG. 5) of the water inlet waterway 10 is communicated with an end of the main control water cavity 11. The water outlet waterway 12 and the water inlet waterway 10 are disposed side by side at intervals, and one end of the water outlet waterway 12 (for example, the left end in FIG. 5) is closed, and the other end of the water outlet waterway 12 (for example, the right end in FIG. 5) is communicated with an end of the main control water cavity 11. At least one water outlet cavity 13 is communicated with the water outlet waterway 12. A core-pulling port 111 is formed at one end of the main control water cavity 11 away from the water inlet waterway 10 and the water outlet waterway 12. Projections of the water inlet waterway 10, the water outlet waterway 12 and the main control water cavity 11 in a plane P (as shown in FIG. 5) where the core-pulling port 111 is located are all in the core-pulling port 111, so that the water inlet waterway 10, the water outlet waterway 12 and the main control water cavity 11 can be formed by core-pulling with the same mold core 15 (as shown in FIG. 3).

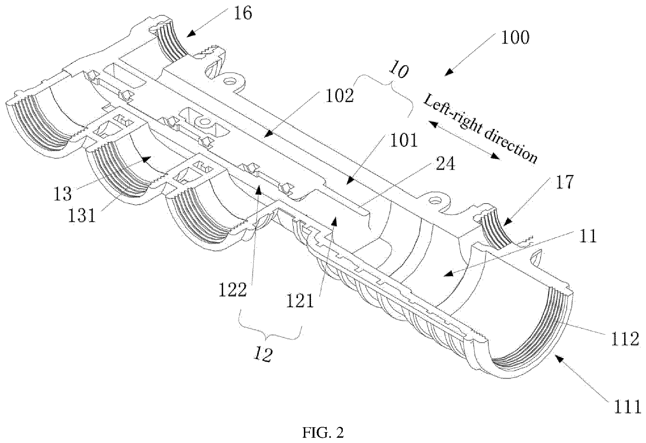

As shown in FIGS. 2 and 5, the water inlet waterway 10 and the water outlet waterway 12 extend in a transverse direction (i.e. a left-right direction) and are disposed side by side at intervals along an extension direction of the water outlet cavity 13 (i.e. an up-down direction in FIG. 5), the left ends of the water inlet waterway 10 and the water outlet waterway 12 are closed, and the right ends of the water inlet waterway 10 and the water outlet waterway 12 communicate with the main control water cavity 11. The core-pulling port 111 and the main control water cavity 11 are located on the right side of the valve body 100, and the mold core 15 enters from the right side of the valve body 100, and is pulled out to the right when core-pulling after molding is completed. Core-pulling is performed once by a die core 15 to form a water inlet waterway 10, a main control water cavity 11 and a water outlet waterway 12, and the water outlet waterway 12 is communicated with at least one water outlet cavity 13, so that the water inlet waterway 10, the main control water cavity 11, the water outlet waterway 12 and at least one water outlet cavity 13 form a continuous passage, thus realizing the function of a conventional water channel. Water enters the main control water cavity 11 from the water inlet waterway 10, then flows into the water outlet waterway 12, and enters at least one water outlet cavity 13 through the water outlet waterway 12. Projections of the water inlet waterway 10, the water outlet waterway 12 and the main control water cavity 11 in a plane P perpendicular to a central axis L of the core-pulling port 111 are all in a projection of the core-pulling port 111 in the plane P, thereby ensuring that the die core 15 can be smoothly pulled out of the core-pulling port 111.

The valve body 100 is formed by integral injection molding, and a water channel can be formed by using a mold core 15 on one side of the valve body 100 (the right side in FIGS. 1, 2 and 5) for core-pulling once, thereby realizing the function of a conventional water channel without opening a core-pulling hole at the other side of the valve body 100 for core-pulling. The water channel is formed by core-pulling on one side, which eliminates a process core-pulling hole on the other side, thereby reducing the number of assembly parts and assembly time, simplifying the water channel structure of the valve body 100, reducing the weight of the valve body 100 and reducing the material cost. In addition, the mold input is reduced, and the injection molding cycle is shorter.

In addition, in the conventional design, the main control water cavity is relatively thin, which is staggered with the water outlet waterway, resulting in the water outlet waterway to be formed by core-pulling from the other side of the valve body alone. In an embodiment of the present application, the cross-sectional area of the main control water cavity 11 is enlarged, so that the projection of the water outlet waterway 12 in a plane where the core-pulling port 111 is located is also in the core-pulling port 111. Thus the water outlet waterway 12 and the main control water cavity 11 can also be formed by core-pulling with a mold core 15. Therefore, the main control water cavity 11 of an embodiment of the present application has a larger inner diameter than that of a main control water cavity of a conventional valve body. This is because the main control water cavity of the conventional valve body fits with a standard valve seat, and a valve seat 145 of the present application is manufactured separately and adopts an eccentric arrangement, so that the outer diameter of the valve seat 145 can be made larger, resulting in the inner diameter of the main control water cavity 11 fitted with the valve seat 145 also larger. Correspondingly, the outer diameter of the die core 15 is larger than that of the conventional die core. Therefore, when the die core 15 is manufactured, the die core 15 is not easily bent or broken, thereby making the manufacture of the die core 15 easier.

In an exemplary embodiment, as shown in FIGS. 2 and 5, the water outlet waterway 12 includes a first transition waterway 121 and a water outlet waterway body 122. The first transition waterway 121 is located between the water outlet waterway body 122 and the main control water cavity 11, and communicates with the water outlet waterway body 122 and the main control water cavity 11. The water outlet waterway body 122 is communicated with at least one water outlet cavity 13. A projection of the water outlet waterway body 122 in a plane P where the core-pulling port 111 is located is in a projection of the first transition waterway 121 in the plane P where the core-pulling port 111 is located. The first transition waterway 121 is disposed in a sealed connection with a water outlet pipe 1453 of the main control valve group 14.

The water flowing out of the water outlet pipe 1453 of the main control valve group 14 directly enters the first transition waterway 121 and then enters the water outlet waterway body 122 to enter at least one water outlet cavity 13. A projection of the water outlet waterway body 122 in the plane P is in a projection of the first transition waterway 121 in the plane P. In FIG. 5, the highest position of the water outlet waterway body 122 is not higher than (lower than, in the figure) the highest position of the first transition waterway 121, and the lowest position of the water outlet waterway body 122 is not lower than the lowest position of the first transition waterway 121. The cross-sectional area of the first transition waterway 121 is larger than the cross-sectional area of the water outlet waterway body 122, so as to ensure that the die core 15 can be smoothly pulled out and the outlet water flow upstream of the water outlet waterway body 122 is relatively large. In a conventional water channel structure, the lowest position of the first transition waterway 121 is generally higher than the highest position of the water outlet waterway body 122, and an additional vertical waterway is often required between the first transition waterway 121 and the water outlet waterway body 122 to communicate with each other, so that it is not possible to simultaneously form the first transition waterway 121 and the water outlet waterway body 122 only by core-pulling from one side. In addition to core-pulling from the right side, there is also a need for core-pulling from the left side to form the water outlet waterway body 122, so that the water outlet waterway body 122 communicates with at least one water outlet cavity 13. The first transition waterway 121 and the water outlet waterway body 122 of the embodiment of the present application extend transversely along the left-right direction and are directly communicated without the need for a vertical waterway to connect the first transition waterway 121 and the water outlet waterway body 122, thereby realizing the simultaneous formation of the first transition waterway 121 and the water outlet waterway body 122 by core-pulling only on one side. Therefore the main control water cavity 11 and the water outlet cavity 13 are communicated without core-pulling on the other side, thus simplifying the water channel structure, helping to reduce the overall volume and weight of the valve body 100 and making the valve body 100 more portable and compact.

In an exemplary embodiment, as shown in FIGS. 2 and 5, the water inlet waterway 10 includes a second transition waterway 101 and a water inlet waterway body 102. The second transition waterway 101 is located between the water inlet waterway body 102 and the main control water cavity 11, and communicates with the water inlet waterway body 102 and the main control water cavity 11. The second transition waterway 101 is disposed in communication with a water inlet hole 1461 of the main control valve group 14. As shown in FIG. 5, a projection of the water inlet waterway body 102 in the plane P where the core-pulling port 111 is located is in a projection of the second transition waterway 101 in the plane P where the core-pulling port 111 is located, the cross-sectional area of the second transition waterway 101 is larger than that of the water inlet waterway body 102, and the lowest position of the second transition waterway 101 is lower than that of the water inlet waterway body 102. This arrangement facilitates the smooth pulling out of the die core 15 and increases the flow of water into the main control water cavity 11 through the second transition waterway 101.

In an exemplary embodiment, as shown in FIGS. 2 and 5, the first transition waterway 121 is separated from the second transition waterway 101 by a spacer plate 24, which is disposed to abut against and fit with the main control valve group 14. The cross-sectional area of the first transition waterway 121 is larger than the cross-sectional area of the second transition waterway 101. A spacer 151 (as shown in FIG. 3) is provided between portions of the mold core 15 corresponding to the first transition waterway 121 and the second transition waterway 101. When a water inlet waterway 10, a water outlet waterway 12 and a main control water cavity 11 are formed, the spacer 151 is filled with plastic, and after being solidified and molded, a spacer plate 24 is formed. The main control valve group 14 abuts against an end face of the right end of the spacer plate 24 so that the main control valve group 14 is positioned in the transverse direction (i.e. the left-right direction). Water enters the main control valve group 14 through the second transition waterway 101 and exits from the main control valve group 14 and enters the first transition waterway 121. The cross-sectional area of the first transition waterway 121 is larger than the cross-sectional area of the second transition waterway 101, so that the outlet water flow is relatively large and the outlet water is smooth. Such water channel structure is simple and compact, and it is also beneficial to simplify the structure of the mold core 15.

In an exemplary embodiment, as shown in FIGS. 1, 2 and 5, the water inlet waterway 10 is a hot water waterway, and the valve body 100 is provided with a first water inlet 16 communicated with the water inlet waterway 10 and a second water inlet 17 communicated with the main control water cavity. The first water inlet 16 is a hot water inlet, the second water inlet 17 is a cold water inlet, and the main control valve group 14 is provided as a temperature control valve group. Hot water and cold water flow into the main control water cavity 11 from the first water inlet 16 and the second water inlet 17, respectively, and then enter the main control valve group 14, i.e., the temperature control valve group installed to the main control water cavity 11, respectively. After passing through the main control valve group 14, the hot water and the cold water are mixed into mixed water at an appropriate temperature and flow out from the water outlet pipe 1453 of the main control valve group 14 to the first transition waterway 121 and the water outlet waterway body 122, and finally enter the water outlet cavity 13.

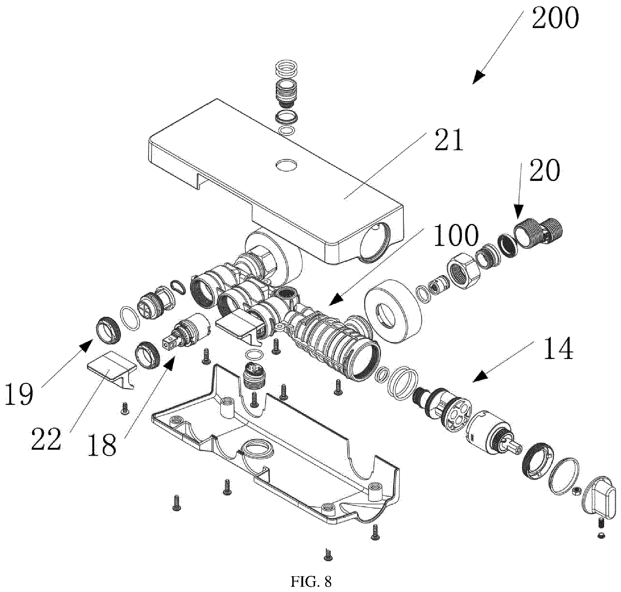

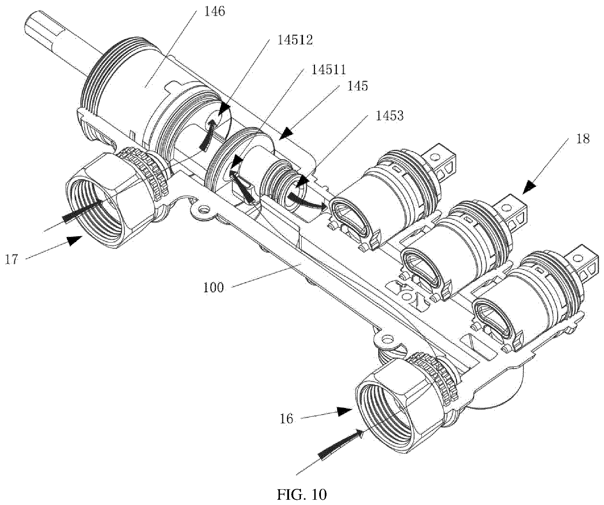

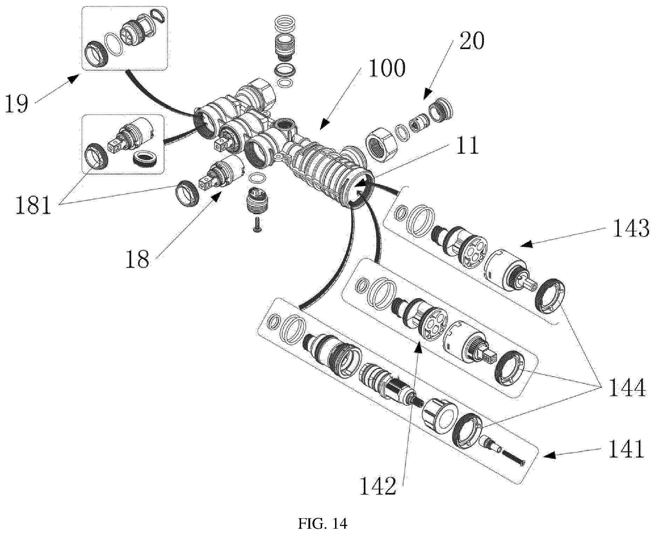

As shown in FIGS. 1-2, 5-6, 8-10 and 14, there are a plurality of water outlet cavities 13, the plurality of water outlet cavities 13 are disposed at intervals along an extension direction of the water outlet waterway 12, and any one of the water outlet cavities 13 is disposed for installation of an on-off valve group 18 or a plug 19. The on-off valve group 18 is used to control the opening and closing of the plurality of water outlet cavities 13. An embodiment of the present application shows three water outlet cavities 13, which can be communicated with a top spray water outlet 132, a hand-held shower water outlet 133, and a drainage water outlet 134, respectively, thereby realizing drainage outlet water, hand-held and top spray functions. One or more of the plurality of water outlet cavities 13 may also be closed with the plug 19 to discard an unwanted outlet water function.

In an exemplary embodiment, as shown in FIGS. 1-2, 5, 8-10 and 14, the main control water cavity 11 is provided with a first connecting structure 112, and the temperature control valve group is a thermostatic valve group 141 or a mechanical temperature regulating valve group 142 provided with a second connecting structure 144, the first connecting structure 112 being disposed to be connected with the second connecting structure 144. The main control water cavity 11 may be equipped with a thermostatic valve group 141 or a mechanical temperature regulating valve group 142. The thermostatic valve group 141 and the mechanical temperature regulating valve group 142 are interchangeable, so that a plurality of valves can be installed on the same valve body to realize a plurality of functions, reduce mold input and reduce cost. The thermostat valve group 141 and the mechanical temperature regulating valve group 142 may employ the existing thermostat valve group and the mechanical temperature regulating valve group. The mechanical temperature regulating valve group 142 may be a mechanical valve group having a switching function and capable of achieving temperature regulation (e.g. from full cold to full hot). Alternatively, the temperature control valve group can also be a single-handle mechanical valve group 143, which has the functions of flow regulation, temperature regulation and switch at the same time to realize the single-handle mechanical function. In the case of a single-handle mechanical valve group 143, a mechanical valve core of the temperature control valve group can be rotated along two axes. The flow of water can be adjusted by rotating along one axis, and rotating along another axis can realize temperature regulation. Furthermore, the water outlet cavity 13 is provided with a third connecting structure 131 disposed to be connected to a fourth connecting structure 181 of the on-off valve group 18 or the plug 19. The water outlet cavity 13 may be fitted with an on-off valve group 18 or with a plug 19, thereby realizing a plurality of functions.

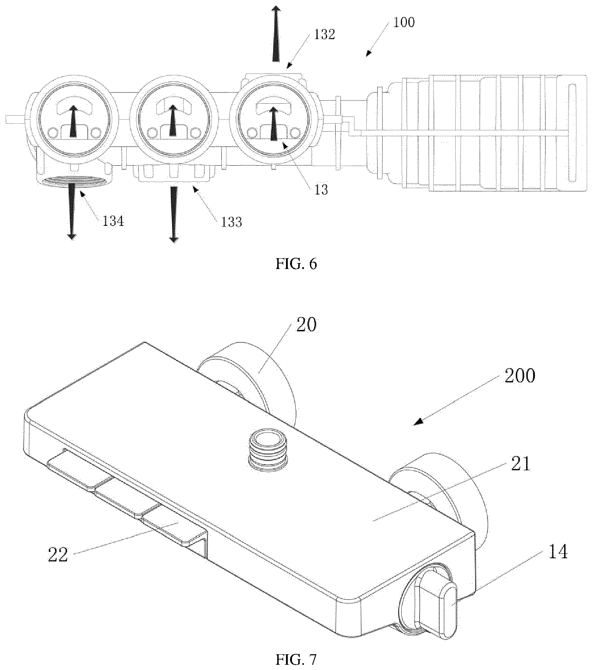

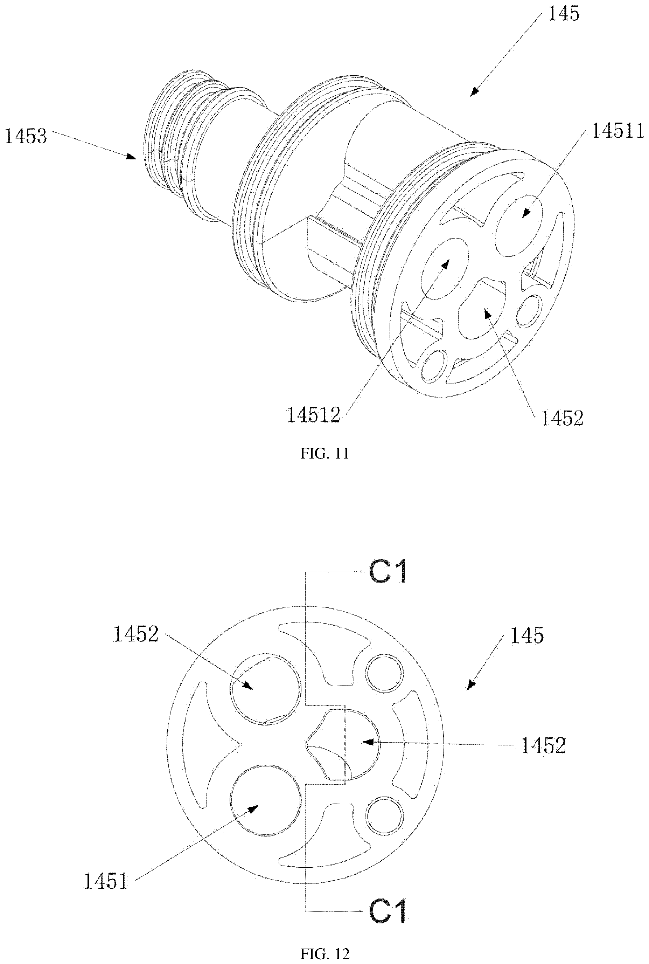

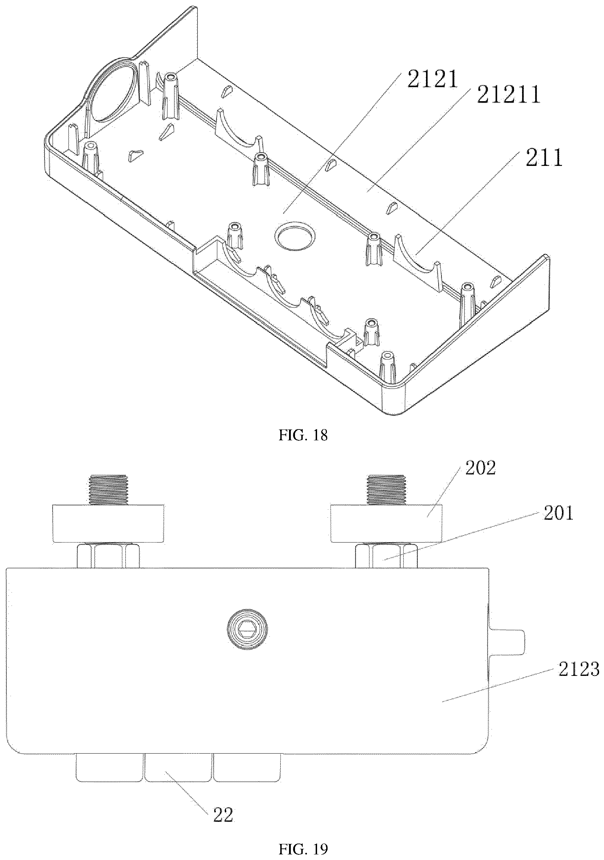

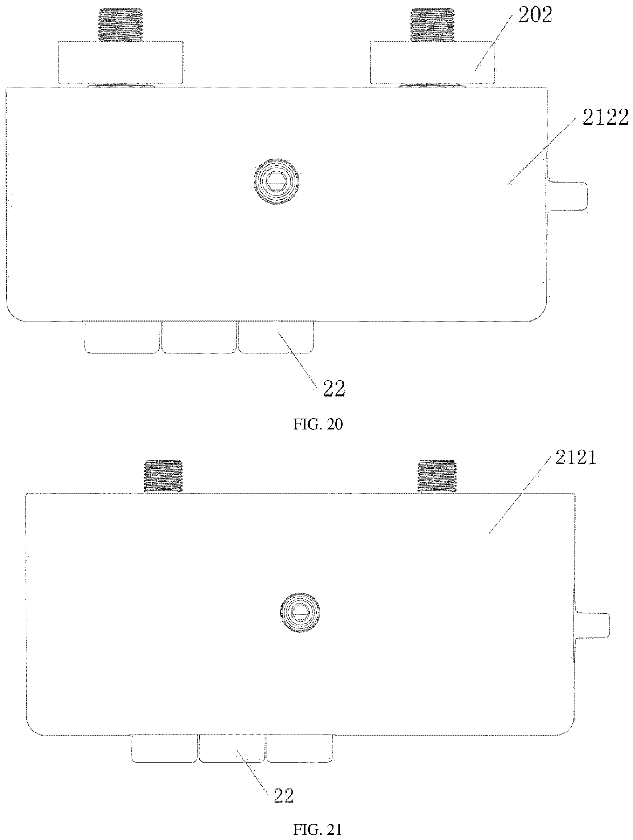

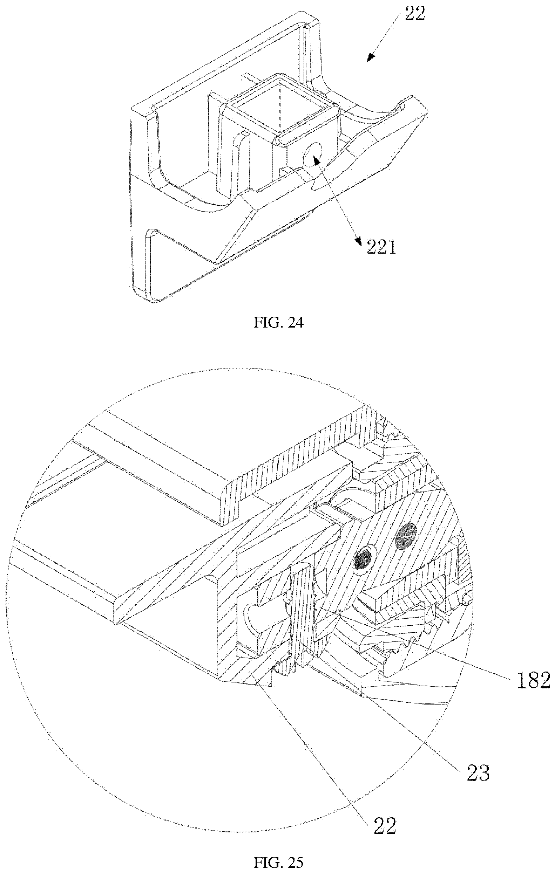

Referring to FIGS. 7-25, an embodiment of the present application also provides a shower faucet 200, including: a valve body 100 of any of the foregoing embodiments; and a main control valve group 14 mounted to the main control water cavity 11. An outer wall surface of the main control valve group 14 is provided with a sealing ring to sealingly cooperate with an inner wall surface of the main control water cavity 11.

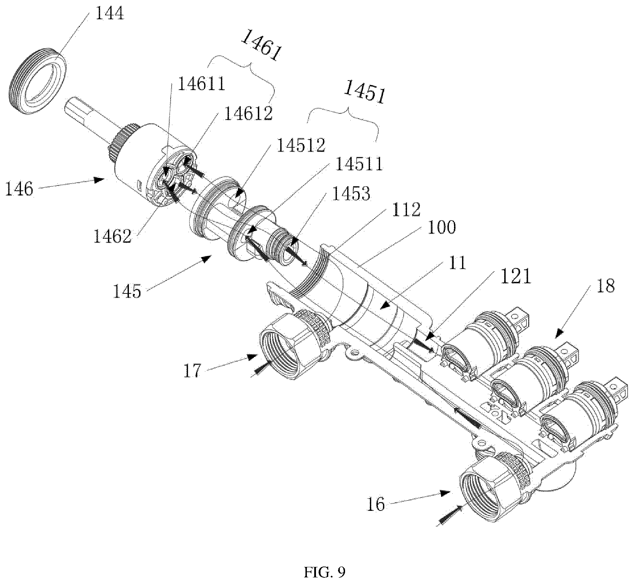

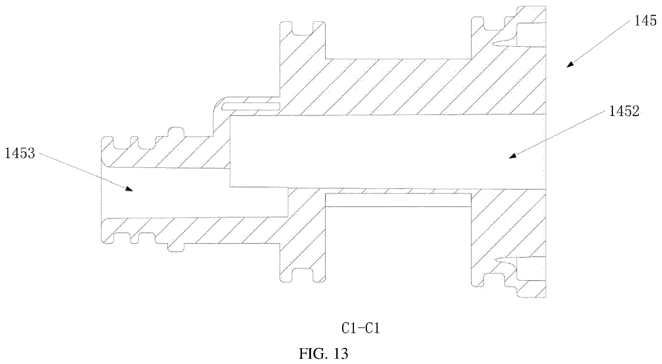

In an exemplary embodiment, as shown in FIGS. 9-13, the main control valve group 14 includes a valve seat 145 and a valve core 146. The valve core 146 is provided with a water inlet hole 1461 and a water outlet hole 1462, and the valve seat 145 is provided with a water flow passage 1451, a water inlet flow passage 1452 and a water outlet pipe 1453. The water inlet waterway 10, the water flow passage 1451 and the water inlet hole 1461 are communicated sequentially. The water outlet hole 1462 is butted and communicated with the water inlet flow passage 1452, and the water outlet pipe 1453 is butted and communicated with the water outlet waterway 12. The water outlet pipe 1453 communicates with the water inlet flow passage 1452 and is disposed eccentrically with respect to the water inlet flow passage 1452. The valve core 146 of the main control valve group 14 is a standard valve core, while the valve seat 145 is manufactured by injection molding using the unique valve seat 145 of an embodiment of the present application. A water inlet flow passage and a water outlet pipe of a standard valve seat are concentric, whereas the water inlet flow passage 1452 and the water outlet pipe 1453 of the valve seat 145 of the present application are eccentric with a central axis of the water outlet pipe 1453 offset by a certain distance with respect to a central axis of the water inlet flow passage 1452. As shown in FIG. 13, the water outlet pipe 1453 is offset downward with respect to the water inlet flow passage 1452 so that the position of the water outlet pipe 1453 is lower with respect to the position of the water outlet pipe of the conventional valve seat. Thus the position of the first transition waterway 121 formed according to the position of the water outlet pipe 1453 is also lower, so that the water outlet waterway 12 can communicate with the respective water outlet cavities 13, thereby eliminating the need for core-pulling from the other side to form the water outlet waterway 12 communicating with the respective water outlet cavities 13. Thus the water channel structure only forms a core-pulling port 111 on one side and is closed on the other side.

As shown in FIGS. 9-13, the water inlet hole 1461 of the valve core 146 is divided into a hot water inlet hole 14611 and a cold water inlet hole 14612. The water flow passage 1451 of the valve seat 145 is divided into a hot water flow passage 14511 and a cold water flow passage 14512. The hot water enters the hot water flow passage 14511 of the valve seat 145 from the first water inlet 16 and then enters the hot water inlet hole 14611 of the valve core 146. The cold water enters from the second water inlet 17 into the cold water flow passage 14512 of the valve seat 145, and then enters into the cold water inlet hole 14612 of the valve core 146. After the cold water and the hot water are mixed through the valve core 146, the mixed water flows out of the valve core from the water outlet hole 1462 of the valve core 146, then flows into the water inlet flow passage 1452 of the valve seat 145, and finally flows out of the water outlet pipe 1453 to the water outlet waterway 12.

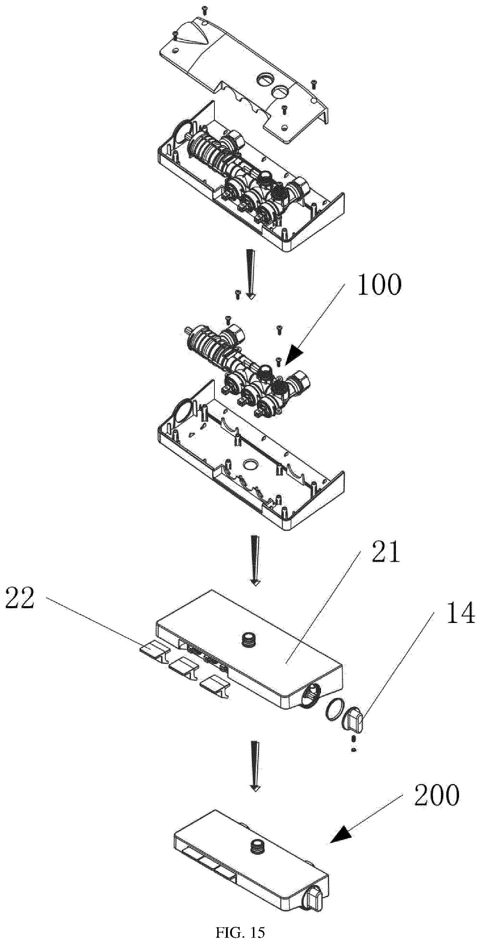

In an exemplary embodiment, as shown in FIG. 15, the shower faucet 200 further includes: a water inlet joint assembly 20 being coupled to the valve body 100 and in communication with the water inlet waterway 10 or the main control valve cavity; a housing 21 being detachably connected with the valve body 100, and provided with an installation cavity and installation notches corresponding to the main control valve group 14, the water inlet joint assembly 20 and the water outlet cavity 13. At least a part of the valve body 100 and at least a part of the main control valve group 14 are located in the installation cavity. When the shower faucet 200 is assembled, after the valve body 100 is assembled, the gas and water can be directly tested without assembling the housing 21. After the valve body 100 is qualified for gas test and water test, the housing 21 shall be assembled to avoid the adverse consequences caused by touching and scratching the housing 21 after installing the housing 21 of the shower faucet 200 for gas test and water test.

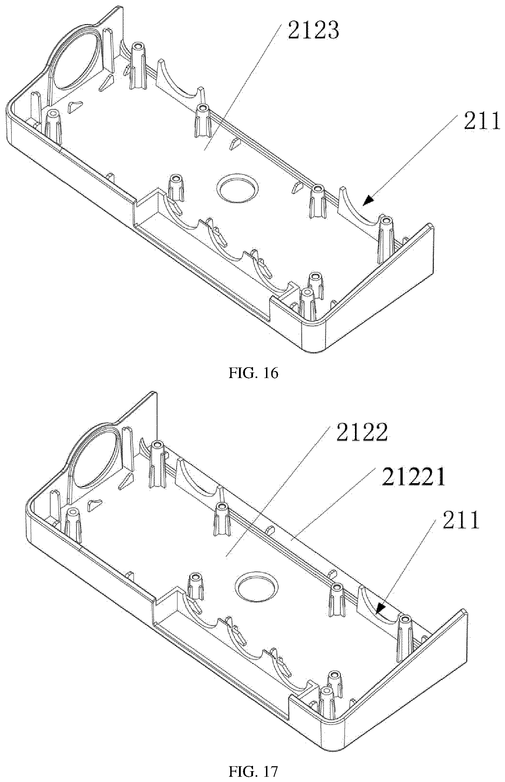

In an exemplary embodiment, as shown in FIGS. 16-21, the housing 21 includes a bottom shell and a cover shell assembled in a split manner. The cover shell includes at least one of a first cover shell 2121, a second cover shell 2122, and a third cover shell 2123. The first cover shell 2121, the second cover shell 2122, and the third cover shell 2123 can all be closed with the bottom shell to form an installation cavity. The water inlet joint assembly 20 includes a nut 201 and a decorative cover 202 arranged sequentially in a direction away from the valve body 100. The first cover shell 2121 is provided with a first shielding portion 21211 for shielding the nut 201 and the decorative cover 202 (corresponding to the full wall installation mode of the housing 21). The second cover shell 2122 is provided with a second shielding portion 21221 for shielding the nut 201, and the decorative cover 202 is exposed on the second cover shell 2122 (corresponding to a semi-exposed installation mode of the housing 21). Both the nut 201 and the decorative cover 202 are exposed on the third cover shell (corresponding to a fully exposed installation mode of the housing 21). The structures of the first cover shell 2121, the second cover shell 2122, and the third cover shell 2123 are approximately the same, except that the dimensions of the first cover shell 2121, the second cover shell 2122, and the third cover shell 2123 along an extension direction of the nut 201 and the decorative cover 202 are different, so that the coverage areas of the nut 201 and the decorative cover 202 are different, resulting in three different installation modes of the housing 21: fully exposed, semi-exposed and fully attached to the wall.

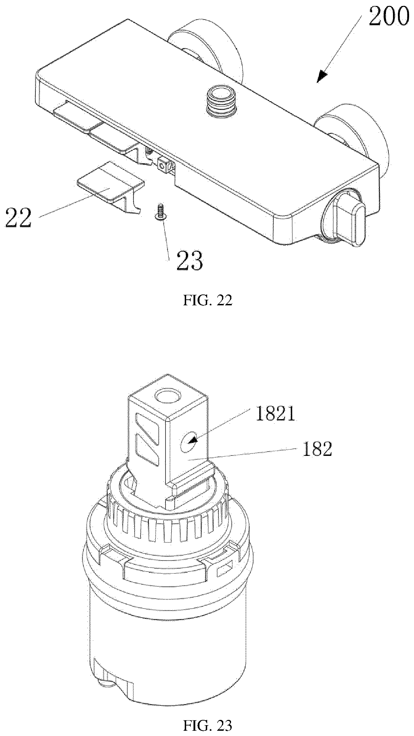

In an exemplary embodiment, as shown in FIGS. 23-25, the water outlet cavity 13 is mounted with an on-off valve group 18 coupled to a handle 22. The on-off valve group 18 includes a valve core rod 182 provided with a first connecting hole 1821. An axis of the first connecting hole 1821 is perpendicular to an extension direction of the valve core rod 182. The handle 22 is provided with a second connecting hole 221, and the first connecting hole 1821 and the second connecting hole 221 are disposed to mount a self-tapping screw 23 to connect the handle 22 and the valve core rod 182 by the self-tapping screw 23. The handle 22 may be made of plastic material, which is beneficial to reduce the cost. The first connecting hole 1821 and the second connecting hole 221 are disposed concentric, and the self-tapping screw 23 is inserted into the first connecting hole 1821 and the second connecting hole 221, thereby connecting the handle 22 and the valve core rod 182. When the self-tapping screw 23 is loosened, the self-tapping screw 23 is still retained in the first connecting hole 1821 and the second connecting hole 221, so that the handle 22 and the valve core rod 182 can still be connected, thereby ensuring the normal use of the handle 22. The device has simple structure, reliable use and low cost.

In the description of the present application, it is to be understood that the orientations or position relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like are based on those shown in the drawings, which are only for convenience of describing the present application and simplifying the description and are not intended to indicate or imply that the referred device or element must have a particular orientation, or is constructed and operated in a particular orientation and therefore cannot be construed as limiting on the present application.

Furthermore, the terms "first", "second" and the like are only used for descriptive purposes and cannot be understood to indicate or imply relative importance or imply the number of technical features indicated. Thus, a feature defined with a "first", "second" and the like may explicitly or implicitly include at least one of the features.

In the description of the present application, "multiple/a plurality of" means at least two, e.g. two, three and the like unless expressly specified otherwise.

In the present application, unless otherwise expressly specified and qualified, terms "mount", "coupling", "connection", "fixation" and the like shall be understood in a broad sense. For example, "connection" may be a fixed connection, a detachable connection or an integrated connection. It may be a mechanical connection or an electrical connection. It may be a direct connection or an indirect connection through an intermediate medium, or may be an internal communication between two elements or an interactive relationship between two elements, unless otherwise expressly defined. For those of ordinary skills in the art, specific meanings of the above terms in the present application can be understood according to specific situations.

In the present application, the first feature being "above" or "below" the second feature may be a direct contact between the first and second features, or an indirect contact between the first and second features via an intermediary, unless otherwise expressly specified and defined. Moreover, the first feature being "on", "above" and "over" the second feature may be the first feature being directly above or obliquely above the second feature, or simply indicate that the first feature is horizontally higher than the second feature. The first feature being "under", "below" and "underneath" the second feature may mean that the first feature is directly below or obliquely below the second feature, or simply mean that the horizontal height of the first feature is less than that of the second feature.

In the description of this specification, descriptions with reference to terms "one embodiment", "some embodiments", "example", "specific example" or "some examples", and the like mean that specific features, structures, materials, or characteristics described in conjunction with the embodiment or example are included in at least one embodiment or example of the present application. In this specification, the schematic illustration of the above terms does not need to be directed to the same embodiments or examples. Further, the specific features, structures, materials, or characteristics described may be combined in a suitable manner in any one or more embodiments or examples. Further, without contradicting one another, those skilled in the art may incorporate and combine different embodiments or examples and features of different embodiments or examples described in this specification.

Although the embodiments of the present application have been illustrated and described above, it may be understood that the above-described embodiments are exemplary and cannot be construed as a restriction on the present application. Changes, modifications, substitutions and variations may be made to the above-described embodiments by those of ordinary skills in the art within the scope of the present application.

## Claims

1. A valve body (100), wherein the valve body (100) is an integrated injection molded part, and a water channel is provided in the valve body (100), the water channel comprises a water inlet waterway (10), a main control water cavity (11), a water outlet waterway (12) and at least one water outlet cavity (13); the main control water cavity (11) is disposed for installation of a main control valve group (14);
one end of the water inlet waterway (10) is closed, and the other end of the water inlet waterway (10) is communicated with an end of the main control water cavity (11);
the water outlet waterway (12) and the water inlet waterway (10) are disposed side by side at intervals, and one end of the water outlet waterway (12) is closed, and the other end of the water outlet waterway (12) is communicated with an end of the main control water cavity (11);
the at least one water outlet cavity (13) is communicated with the water outlet waterway (12);
a core-pulling port (111) is formed at an end of the main control water cavity (11) away from the water inlet waterway (10) and the water outlet waterway (12), and projections of the water inlet waterway (10), the water outlet waterway (12) and the main control water cavity (11) in a plane where the core-pulling port (111) is located are all in the core-pulling port (111), so that the water inlet waterway (10), the water outlet waterway (12) and the main control water cavity (11) are capable of being formed by core-pulling with the same mold core (15).

2. The valve body (100) according to claim 1, wherein the water outlet waterway (12) comprises a first transition waterway (121) and a water outlet waterway body (122); the first transition waterway (121) is located between the water outlet waterway body (122) and the main control water cavity (11), and is communicated with the water outlet waterway body (122) and the main control water cavity (11); the water outlet waterway body (122) is communicated with the at least one water outlet cavity (13);
a projection of the water outlet waterway body (122) in the plane where the core-pulling port (111) is located is in a projection of the first transition waterway (121) in the plane where the core-pulling port (111) is located, and the first transition waterway (121) is disposed to be sealingly connected with a water outlet pipe (1453) of the main control valve group (14).

3. The valve body (100) according to claim 2, wherein the water inlet waterway (10) comprises a second transition waterway (101) and a water inlet waterway body (102); the second transition waterway (101) is located between the water inlet waterway body (102) and the main control water cavity (11), and is communicated with the water inlet waterway body (102) and the main control water cavity (11);
the second transition waterway (101) is disposed to communicate with a water inlet hole (1461) of the main control valve group (14), and a projection of the water inlet waterway body (102) in the plane where the core-pulling port (111) is located is in a projection of the second transition waterway (101) in the plane where the core-pulling port (111) is located.

4. The valve body (100) according to claim 3, wherein the first transition waterway (121) and the second transition waterway (101) are separated by a spacer plate (24), and the spacer plate (24) is disposed to abut against and fit with the main control valve group (14);
a cross-sectional area of the first transition waterway (121) is larger than a cross-sectional area of the second transition waterway (101).

5. The valve body (100) according to any one of claims 1 to 4, wherein the water inlet waterway (10) is a hot water waterway, the valve body (100) is provided with a first water inlet (16) communicated with the water inlet waterway (10) and a second water inlet (17) communicated with the main control water cavity (11), one of the first water inlet (16) and the second water inlet (17) is a cold water inlet, the other of the first water inlet (16) and the second water inlet (17) is a hot water inlet, and the main control valve group (14) is provided as a temperature control valve group;
there are a plurality of water outlet cavities (13), the plurality of water outlet cavities (13) are disposed at intervals along an extension direction of the water outlet waterway (12), and any one of the water outlet cavities (13) is disposed for installation of an on-off valve group (18) or a plug (19).

6. The valve body (100) according to claim 5, wherein the main control water cavity (11) is provided with a first connecting structure (112), the temperature control valve group is a thermostatic valve group (141) or a mechanical temperature regulating valve group (142) provided with a second connecting structure (144), and the first connecting structure (112) is disposed to be connected with the second connecting structure (144);
the water outlet cavity (13) is provided with a third connecting structure (131), and the third connecting structure (131) is disposed to be connected with a fourth connecting structure (181) of the on-off valve group (18) or the plug (19).

7. A shower faucet (200) comprising:
the valve body (100) according to any one of claims 1 to 6; and
a main control valve group (14) being installed to the main control water cavity (11).

8. The shower faucet (200) according to claim 7, wherein the main control valve group (14) comprises a valve seat (145) and a valve core (146), the valve core (146) is provided with a water inlet hole (1461) and a water outlet hole (1462), the valve seat (145) is provided with a water flow passage (1451), a water inlet flow passage (1452) and a water outlet pipe (1453), and the water inlet waterway (10), the water flow passage (1451) and the water inlet hole (1461) are communicated sequentially; the water outlet hole (1462) is butted and communicated with the water inlet flow passage (1452), and the water outlet pipe (1453) is butted and communicated with the water outlet waterway (12); the water outlet pipe (1453) is communicated with the water inlet flow passage (1452) and is disposed eccentrically with respect to the water inlet flow passage (1452).

9. The shower faucet (200) according to claim 7 or 8, further comprising:
a water inlet joint assembly (20) being connected with the valve body (100) and communicated with the water inlet waterway (10) or a main control valve cavity;
a housing (21) being detachably connected with the valve body (100) and provided with an installation cavity and installation notches (211) corresponding to the main control valve group (14), the water inlet joint assembly (20) and the water outlet cavity (13), and at least a part of the valve body (100) and at least a part of the main control valve group (14) being located in the installation cavity.

10. The shower faucet (200) according to claim 9, wherein the housing (21) comprises a bottom shell and a cover shell assembled in a split manner; the cover shell comprises at least one of a first cover shell (2121), a second cover shell (2122) and a third cover shell (2123), the first cover shell (2121), the second cover shell (2122) and the third cover shell (2123) are all capable of being closed with the bottom shell to form the installation cavity;
the water inlet joint assembly (20) comprises a nut (201) and a decorative cover (202) located outside the installation cavity, the nut (201) and the decorative cover (202) are arranged sequentially along a direction away from the valve body (100);
the first cover shell (2121) is provided with a first shielding portion (21211) for shielding the nut (201) and the decorative cover (202);
the second cover shell (2122) is provided with a second shielding portion (21221) for shielding the nut (201), and the decorative cover (202) is exposed on the second cover shell (2122);
both the nut (201) and the decorative cover (202) are exposed on the third cover shell (2123).

11. The shower faucet (200) according to claim 7 or 8, wherein the water outlet cavity (13) is provided with an on-off valve group (18) connected to a handle (22), the on-off valve group (18) comprises a valve core rod (182) provided with a first connecting hole (1821), an axis of the first connecting hole (1821) is perpendicular to an extension direction of the valve core rod (182), the handle (22) is provided with a second connecting hole (221), the first connecting hole (1821) and the second connecting hole (221) are disposed for installation of a self-tapping screw (23) to connect the handle (22) and the valve core rod (182) by the self-tapping screw (23).
